# FASCICULE DE BREVET EUROPEEN

(11) **EP 3 746 652 B1**
(45) Date de publication et mention de la délivrance du brevet: **27.11.2024**
(21) Numéro de dépôt: 19702566.1
(22) Date de dépôt: 29.01.2019
(51) Int. Cl.: F02M 25/022, C02F 1/42, C02F 1/00, F02M 25/025, C02F 103/02

(54) **SYSTÈME D'INJECTION D'UNE SOLUTION AQUEUSE DANS UN MOTEUR À INJECTION**
INJECTION SYSTEM OF AN AQUEOUS SOLUTION IN AN INJECTION ENGINE
EINSPRITZSYSTEM EINER WÄSSRIGEN LÖSUNG IN EINEM VERBRENNUNGSMOTOR MIT EINSPRITZUNG

(30) Priorité: 29.01.2018 FR 1850681
(43) Date de publication de la demande: 09.12.2020
(73) Titulaire: Plastic Omnium Advanced Innovation And Research, 1130 Bruxelles (BE)
(72) Inventeur: DHAUSSY, Franck, 60280 MARGNY-LES-COMPIEGNE (FR); LEONARD, Stéphane, 1090 BRUXELLES (BE); DUEZ, Laurent, 1180 UCCLE (BE); OSZWALD, Pierre, 60350 Berneuil sur Aisne (FR)
(74) Mandataire: LLR
(86) Numéro de dépôt international: PCT/EP2019/052115
(87) Numéro de publication internationale: WO 2019/145561

(56) Documents cités:
- WO-A1-2006/092887
- WO-A1-2016/177556
- WO-A1-2016/177561
- WO-A1-2017/137100
- US-A1- 2004 031 752
- US-A1- 2006 266 307
- US-A1- 2016 016 836

## Description

La présente invention concerne, de façon générale, le domaine technique des réservoirs de stockage d'un liquide configurés pour délivrer un liquide à un moteur à combustion. Plus particulièrement, l'invention se rapporte à un système d'injection d'un liquide, en particulier une solution aqueuse, dans un moteur à injection d'un véhicule, en particulier automobile.

L'invention concerne également un procédé d'injection d'une solution aqueuse dans un moteur à injection.

L'invention concerne aussi un procédé de purification d'une solution aqueuse pour un système d'injection d'une solution aqueuse dans un moteur à injection.

L'invention concerne enfin un procédé de diagnostic de la pureté d'une solution aqueuse pour un système d'injection d'une solution aqueuse dans un moteur à injection.

Il est connu d'injecter de l'eau dans le circuit d'admission d'air du moteur. Cette eau se mélange au gaz d'admission et permet de réduire les températures de combustion et les émissions de polluants appelés NOx, et d'augmenter les performances, par exemple, d'un moteur essence en diminuant la sensibilité au cliquetis. Un tel système d'injection est décrit dans le document de brevet FR2801076A1 ou ncore dans WO2017/137100A1.

Cependant, pour assurer le bon fonctionnement d'un système d'injection traditionnel, il est connu de remplir le réservoir de stockage avec de l'eau déminéralisée afin de ne pas boucher le circuit d'injection avec du tartre. Ceci n'est pas satisfaisant. En effet, remplir le réservoir avec de l'eau déminéralisée est contraignant. L'utilisateur d'un véhicule automobile équipé d'un tel système d'injection doit prendre avec lui des bidons d'eau déminéralisée quand il part en voyage car il faut prévoir environ 3 litres d'eau déminéralisée pour 1000 kilomètres parcourus. Certes, on peut acheter de l'eau déminéralisée dans les stations-service, mais l'utilisateur n'en trouvera pas dans toutes les stations-service.

Un but de l'invention est notamment de pallier les inconvénients précités. A cet effet, l'invention a pour objet un système d'injection d'une solution aqueuse dans un moteur à injection, comprenant un réservoir d'une solution aqueuse, un circuit d'alimentation en solution aqueuse du réservoir, un filtre de filtration de la solution aqueuse et un circuit de recirculation de la solution aqueuse. Selon l'invention, le système d'injection comprend, en outre, un circuit de recirculation de la solution aqueuse et une électrovanne comprenant une première entrée raccordée à une goulotte de remplissage du réservoir, une deuxième entrée raccordée au circuit de recirculation, et une sortie raccordée au circuit d'alimentation, le filtre de filtration étant placé dans ledit circuit d'alimentation et/ou dans ledit circuit de recirculation.

Grâce à l'invention, il n'est plus nécessaire de remplir le réservoir de stockage avec de l'eau déminéralisée. En effet, l'utilisateur du véhicule peut remplir le réservoir de stockage avec de l'eau du robinet ou de l'eau de pluie sans risquer d'entartrer le circuit d'injection car cette eau est filtrée par le système d'injection. L'eau du robinet est facile à trouver, il y en a dans toutes les stations-service et même en dehors. Grâce à l'invention, l'utilisateur n'a plus besoin d'embarquer des bidons d'eau déminéralisée dans son véhicule, ni de chercher une station-service qui vend de l'eau déminéralisée, il lui suffit de trouver un robinet d'eau courante et de remplir le réservoir de stockage avec cette eau, par exemple, en utilisant un tuyau ou un arrosoir.

Dans les différents modes de réalisation qui vont être décrits par la suite, l'eau qui est versée dans le réservoir de stockage par l'utilisateur est amenée dans un circuit de recirculation du système d'injection, c'est un circuit dans lequel l'eau va traverser le filtre de filtration autant de fois que nécessaire pour être déminéralisée. On appelle « eau recirculée », l'eau qui traverse le circuit de recirculation.

Dans un mode particulier de réalisation de l'invention, le filtre de filtration est placé à la fois dans le circuit d'alimentation du réservoir et dans le circuit de recirculation du réservoir. Dans ce mode de réalisation, l'eau qui est versée dans le circuit d'alimentation est filtrée une première fois avant de remplir le réservoir. Cette configuration du filtre est particulièrement avantageuse quand le réservoir est rempli avec de l'eau de pluie. En effet, l'eau de pluie contient souvent plus de minéraux et d'impuretés que l'eau du robinet.

Dans un mode préféré de réalisation de l'invention, le filtre de filtration est placé dans le seul circuit de recirculation du réservoir. Dans ce mode préféré de réalisation, le réservoir est rempli plus rapidement du fait de l'absence de perte de charge dans le circuit d'alimentation, grâce à l'absence de filtre dans le circuit d'alimentation.

Selon des caractéristiques additionnelles de l'invention :
le système comprend en outre un conduit d'injection destiné à être relié à un circuit d'admission du moteur à injection, le système étant configuré de sorte que la solution aqueuse en provenance du filtre de filtration transite par le réservoir avant de pénétrer dans le conduit d'injection.
- le circuit d'alimentation comprend une tubulure d'alimentation raccordée au réservoir ainsi qu'une goulotte de remplissage du réservoir raccordée à la tubulure d'alimentation. Ainsi, le point de remplissage du réservoir n'est pas lié à l'endroit où se trouve le réservoir dans le véhicule.
- le circuit de recirculation comprend une tubulure d'entrée dans le réservoir et une tubulure de sortie du réservoir. De cette façon, l'eau est recirculée à l'extérieur du réservoir, ce qui présente l'avantage de rendre le filtre plus facile d'accès quand ce dernier est placé dans le circuit de recirculation.
- la solution aqueuse est de l'eau, notamment de l'eau du robinet ou de l'eau de pluie, et le filtre est un filtre qui retient les minéraux et/ou les impuretés. De cette façon, on empêche les minéraux et/ou les impuretés qui pourraient être présents dans l'eau du réservoir d'entrer dans le circuit d'injection du moteur.
- le filtre qui retient les minéraux est un filtre de déminéralisation comprenant un média filtrant constitué d'une résine à échange d'ions. Ainsi, même de l'eau très dure peut être déminéralisée.
- le filtre qui retient les impuretés est un filtre fin. Ceci est particulièrement avantageux quand l'eau du réservoir présente, outre des minéraux, des particules en suspension susceptibles de boucher le circuit d'injection.
- le filtre est un filtre amovible interchangeable. De cette façon, on facilite la maintenance du filtre.
- le filtre comprend une cartouche filtrante lavable, rechargeable ou jetable. Ainsi, le filtre peut être nettoyé, rechargé ou remplacé à loisir.
- le filtre comprend des moyens de chauffage apte à chauffer la solution aqueuse. Ceci est particulièrement avantageux quand l'eau présente dans le filtre est gelée et qu'il faut la dégeler.
- le système d'injection selon l'invention comprend, en outre, un capteur de qualité de ladite solution aqueuse. Ainsi, on augmente la durée de vie du filtre en réduisant le temps de recirculation de l'eau au minimum, c'est-à-dire au temps minimum nécessaire pour que l'eau recirculée présente les propriétés physico-chimiques voulues. Ce faisant, on augmente la durée de vie de la pompe, on réduit le bruit et la puissance électrique consommée.

On prévoit aussi selon l'invention un procédé de purification d'une solution aqueuse pour un système d'injection d'une solution aqueuse dans un moteur à injection comprenant les étapes suivantes :
- remplir un réservoir avec une solution aqueuse par un circuit d'alimentation,
- pomper ladite solution aqueuse contenue dans ledit réservoir,
- envoyer ladite solution aqueuse pompée dans un circuit de recirculation de ladite solution aqueuse,
- filtrer ladite solution aqueuse dans ledit circuit d'alimentation et/ou dans ledit circuit de recirculation.

De préférence, le procédé de purification comprend en outre les étapes suivantes, après l'étape de filtration :
- envoyer ladite solution aqueuse dans le réservoir,
- envoyer ladite solution aqueuse dans un conduit d'injection destiné à être relié à un circuit d'admission du moteur à injection.

On prévoit également selon l'invention un procédé de diagnostic d'une solution aqueuse pour un système d'injection d'une solution aqueuse dans un moteur à injection comprenant les étapes suivantes :
- mesurer une propriété physico-chimique σ d'une solution aqueuse contenue dans un réservoir,
- comparer la propriété physico-chimique σₘ mesurée à une plage de valeurs de référence [σ_{ref.min},σ_{ref.max}] où σ_{ref.min} est une valeur de référence minimale et σ_{ref.max} est une valeur de référence maximale,
- envoyer ladite solution aqueuse dans un filtre de déminéralisation si la propriété physico-chimique σₘ mesurée est en dehors de ladite plage de valeurs de référence [σ_{ref.min},σ_{ref.max}],
- répéter les étapes précédentes tant que la propriété physico-chimique σₘ mesurée est en dehors de ladite plage de valeurs de référence [σ_{ref.min},σ_{ref.max}],
- signaler par un signal S un problème si après un temps prédéterminé T la propriété physico-chimique mesurée σₘ reste en dehors de ladite plage de valeurs de référence [σ_{ref.min},σ_{ref.max}]. Un signal S est, typiquement, un voyant qui s'allume sur le tableau de bord du véhicule. Avantageusement, T est compris entre 3 minutes et 30 minutes.

On prévoit enfin selon l'invention un procédé d'injection d'une solution aqueuse dans un moteur à injection comprenant les étapes suivantes :
- mesurer une propriété physico-chimique σ d'une solution aqueuse contenue dans un réservoir,
- comparer la propriété physico-chimique σₘ mesurée à une plage de valeurs de référence [σ_{ref.min},σ_{refmax}] où σ_{ref.min} est une valeur de référence minimale et σ_{ref.max} est une valeur de référence maximale,
- envoyer ladite solution aqueuse dans le moteur à injection si la propriété physico-chimique σₘ mesurée est dans ladite plage de valeurs de référence [σ_{ref.min},σ_{ref.max}].

On va maintenant décrire, à titre d'exemples non limitatifs, différents modes de réalisation de l'invention à l'aide des figures suivantes :
- la figure 1 est une vue schématique en coupe d'un système d'injection d'une solution aqueuse dans un moteur à injection selon un mode de réalisation ne faisant pas partie de l'invention,
- la figure 2 est une vue schématique en coupe d'un système d'injection d'une solution aqueuse dans un moteur à injection selon un premier mode de réalisation de l'invention,
- la figure 3 est une vue schématique en coupe d'un système d'injection d'une solution aqueuse dans un moteur à injection selon un deuxième mode de réalisation de l'invention,
- la figure 4 est une vue schématique d'une cartouche filtrante selon l'invention,
- la figure 5 est une vue schématique d'une autre cartouche filtrante selon l'invention.

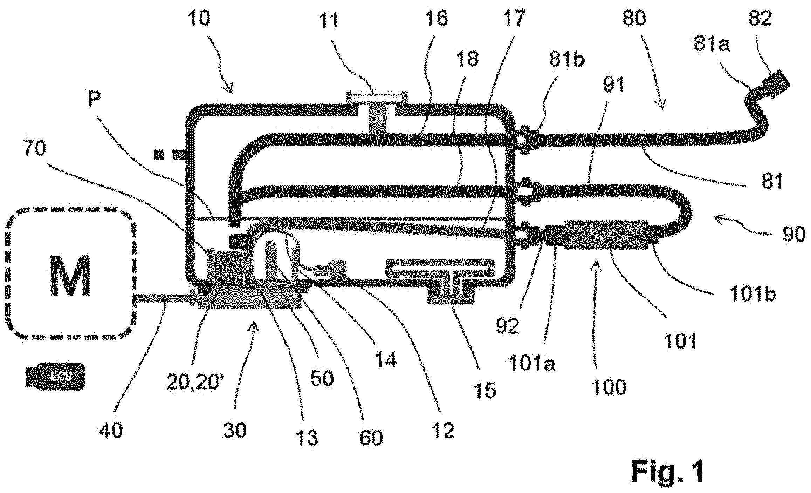

Un système d'injection d'une solution aqueuse dans un circuit d'admission d'un moteur à injection tel qu'illustré sur la figure 1 comprend un réservoir de stockage 10 destiné à recevoir une solution aqueuse, laquelle est, préférentiellement, de l'eau. Dans l'exemple illustré, le réservoir est fabriqué à partir de deux demi-coquilles obtenues par moulage d'un matériau plastique. Les deux demi-coquilles sont thermo-soudées l'une à l'autre le long d'un plan de joint P pour former un réservoir de stockage fermé. Des composants sont introduits et fixés dans le réservoir avant sa fermeture par thermo-soudage. En fonctionnement, l'eau du réservoir (non représentée) est pompée par une pompe d'alimentation 20. La pompe d'alimentation 20 est une pompe électrique logée à l'intérieur du réservoir 10, dans le fond de ce dernier, et fait partie d'un module d'alimentation en eau 30 du moteur à injection. Un module d'alimentation en eau, aussi appelé WDM pour « Water Delivery Module » en langue anglaise, est un ensemble de composants agencés pour fournir de l'eau sous pression à un moteur à injection M. Parmi les composants du module WDM, on trouve une pompe à eau comme la pompe d'alimentation 20 et un conduit d'injection 40, pour injecter de l'eau sous pression dans le moteur M. On peut aussi trouver un capteur de température 50, pour mesurer la température de l'eau et un capteur de qualité 60 pour mesurer une ou plusieurs propriétés physico-chimiques de l'eau. Au surplus, le module WDM peut accueillir un pot stabilisateur 70, aussi appelé « swirl pot » en langue anglaise, destiné à stocker en permanence un volume d'eau utile au bon fonctionnement de la pompe d'alimentation 20. On peut aussi trouver un capteur de niveau d'eau (non représenté), soit à l'intérieur du pot stabilisateur 70, soit à l'extérieur de ce dernier.

En fonctionnement, l'eau pompée est envoyée sous pression par le conduit d'injection 40 dans le circuit d'admission (non représenté) du moteur à injection M. Dans un mode de réalisation particulier de l'invention, l'eau est injectée dans le moteur avec une pression de 10,5 bars.

On rappelle que le but d'un système d'injection d'eau est de réduire la température du mélange air-carburant à l'entrée de la chambre de combustion du moteur à injection. Grâce à un tel système, on obtient une meilleure résistance à la compression des moteurs à essence et une meilleure combustion dans les moteurs diesel. L'eau a également un effet de refroidissement des pièces internes du moteur (pistons et cylindres). Il en résulte une réduction de la pollution (particules imbrûlées, CO, NOx) et une économie de carburant pouvant atteindre 25 % en usage intensif.

Dans les systèmes d'injection d'eau dans le moteur, la pompe d'alimentation 20 est commandée par une unité de contrôle électronique ECU (« Electronic Control Unit » en langue anglaise) du moteur à injection. L'unité ECU agit sur des actionneurs tels que des injecteurs, des volets d'admission d'air, des pompes, en fonction d'information qu'elle reçoit de capteurs comme par exemple des capteurs de position de la pédale d'accélérateur, de température du moteur, de température de l'air, du taux d'oxygène, etc. Quand l'unité ECU considère que les conditions requises pour pouvoir injecter de l'eau dans le moteur M sont réunies, elle commande l'activation de la pompe d'alimentation 20. Toutefois, afin de ne pas entartrer le circuit d'injection d'eau qui contient, notamment, le conduit d'injection 40 et les injecteurs d'eau (non représentés), l'eau qui est injectée dans le moteur M est de l'eau déminéralisée, c'est-à-dire une eau qui ne contient, en principe, aucun ion tels que Ca²⁺ et HCO₃⁻. Dans l'industrie automobile, on considère qu'une eau est déminéralisée quand sa conductivité électrique est inférieure à 100 µS/cm à 25°C. Parfois, les exigences sont plus sévères et de l'eau sera considérée comme déminéralisée si sa conductivité électrique est inférieure à 50 µS/cm à 25°C.

Remplir le réservoir avec de l'eau déminéralisée est contraignant. En effet, l'eau déminéralisée n'est pas disponible naturellement, le conducteur d'un véhicule équipé d'un tel système d'injection doit emmener avec lui des bidons d'eau déminéralisée quand il part en voyage car il faut prévoir environ 3 litres d'eau déminéralisée pour 1000 kilomètres parcourus. Certes, on peut acheter de l'eau déminéralisée dans les stations-service, mais le conducteur n'en trouvera pas dans toutes les stations-service.

Un premier but de la présente invention est de supprimer la contrainte d'avoir à utiliser de l'eau déminéralisée dans un système d'injection d'eau dans un moteur à combustion. Pour cela, l'invention propose de filtrer l'eau dans un filtre de déminéralisation avant de l'injecter dans le moteur à combustion. Dès lors, et grâce à l'invention, il est possible d'utiliser de l'eau du robinet ou de l'eau de pluie pour remplir le réservoir de stockage, ceci sans risquer d'entartrer le circuit d'injection d'eau. Ainsi, le conducteur n'a plus besoin de s'alourdir avec des bidons d'eau déminéralisation avant de partir en voyage ou d'acheter de l'eau déminéralisée dans les stations-service, quand il en trouve.

Dans un mode préféré de réalisation de l'invention, le système d'injection d'eau comprend un réservoir de stockage d'eau 10, un circuit d'alimentation 80 du réservoir de 10, un circuit de recirculation 90 de l'eau du réservoir 10 et un filtre 100 de filtration de l'eau du réservoir 10. Le circuit d'alimentation 80 est constitué d'une tubulure d'alimentation 81 et d'une goulotte de remplissage 82 par laquelle de l'eau est introduite dans le système d'injection d'eau. La tubulure d'alimentation 81 présente deux extrémités, une première extrémité 81a à laquelle est raccordée la goulotte de remplissage et, une seconde extrémité 81b raccordée par l'extérieur au réservoir 10 et débouchant dans le haut du réservoir. Des moyens (non représentés) sont prévus pour assurer l'étanchéité des raccordements. A l'instar du circuit d'alimentation 80, le circuit de recirculation 90 est raccordé par l'extérieur au réservoir 10.

Selon un mode de réalisation ne faisant pas partie de l'invention illustré à la figure 1, le circuit de recirculation 90 est constitué d'une tubulure d'entrée 91 dans le réservoir 10 et d'une tubulure de sortie 92 du réservoir, et la tubulure d'entrée 91 dans le réservoir débouche dans le haut du réservoir 10 et la tubulure de sortie 92 du réservoir débouche dans le bas du réservoir 10.

Dans le cadre de la présente description, on appelle le bas, ou le fond du réservoir, la partie du réservoir qui se remplit en premier et on appelle le haut du réservoir, la partie du réservoir qui se remplit en dernier. De même, on appelle l'intérieur du réservoir le volume délimité par les parois du réservoir dans lequel l'eau est stockée, et on appelle l'extérieur du réservoir le volume ouvert autour du réservoir.

Un filtre 100 de filtration de l'eau du réservoir 10 est placé dans le circuit de recirculation 90. Dans un mode de réalisation ne faisant pas partie de l'invention illustré à la figure 1, le filtre 100 est placé entre la tubulure de sortie 92 du réservoir et la tubulure d'entrée 91 dans le réservoir.

Selon l'invention, le filtre 100 est un filtre de déminéralisation, par exemple, un filtre contenant un média filtrant constitué d'une résine à échange d'ions. Une pompe de recirculation 20', commandée par l'unité ECU, pompe l'eau contenue dans le réservoir 10 pour l'envoyer sous pression, soit dans le circuit de recirculation 90 quand l'eau n'est pas déminéralisée, soit dans le circuit d'admission du moteur via le conduit d'injection 40, quand l'eau est déminéralisée. L'eau qui sort du réservoir 10 étant déminéralisée, elle n'a plus besoin de passer par un filtre de déminéralisée avant d'être envoyée dans le circuit d'admission du moteur. Dans ce mode avantageux de réalisation, la pompe de recirculation 20' et la pompe d'alimentation 20 ne forment qu'une seule pompe. Afin de déterminer dans quel circuit envoyer l'eau, l'unité ECU compte sur les informations fournies par un capteur de qualité 60 pour l'informer de la concentration en ions de l'eau. Un capteur de qualité est, par exemple, un capteur de conductivité électrique de l'eau. Le capteur de qualité est placé à l'intérieur du réservoir 10, dans le fond de ce dernier, de préférence à l'intérieur du pot stabilisateur 70 afin que même si le réservoir 10 est presque vide, le capteur de qualité reste immergé dans l'eau. Dans le cas où le capteur de qualité 60 est un capteur qui mesure en continu la conductivité électrique de l'eau contenue dans le réservoir 10, les mesures relevées sont comparées à une plage de valeurs de conductivité électrique de référence, par exemple [0,100] µS/cm et - de préférence - [2,50] µS/cm, où 0 µS/cm, respectivement 2 µS/cm, est une valeur de référence minimale et où 100 µS/cm, respectivement 50 µS/cm, est une valeur de référence maximale. Si les valeurs mesurées sont en dehors de ladite plage de valeurs de référence, alors l'unité ECU commande à la pompe 20 d'envoyer l'eau dans le circuit de recirculation 90 afin de déminéraliser l'eau. Par contre, si les valeurs mesurées sont dans la plage de valeurs de référence, alors l'unité ECU commande à la pompe 20 d'envoyer l'eau du réservoir 10 dans le circuit d'admission du moteur, via le conduit d'injection 40, sans passer par un autre filtre de déminéralisation. Il peut arriver que les valeurs mesurées restent en dehors de la plage de valeurs de référence, en sorte que l'eau n'est plus injectée dans le moteur. Cette situation peut se produire, par exemple, quand le filtre 100 est colmaté, endommagé ou absent. Dans ce cas, l'unité ECU signale un problème avec le filtre en allumant un voyant sur le tableau de bord du véhicule. En réponse à ce signal, le conducteur ou le technicien en charge de la maintenance du véhicule équipé de ce système d'injection nettoiera, rechargera ou remplacera le filtre.

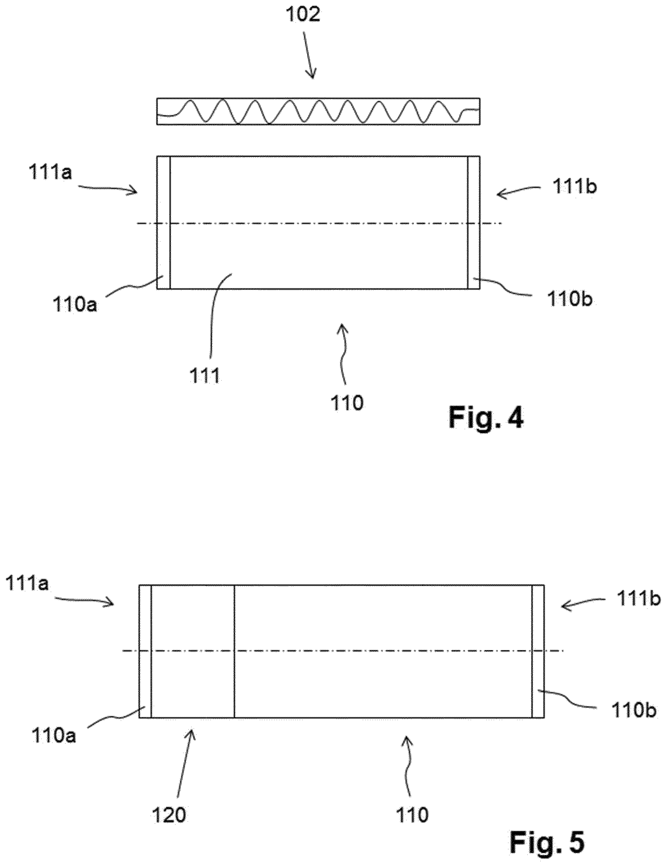

Avantageusement le filtre 100 de déminéralisation est un filtre amovible interchangeable pour être facile à retirer et à remplacer par le conducteur ou le technicien en charge de la maintenance du véhicule. Dans un mode de réalisation préféré de l'invention, le filtre amovible interchangeable de déminéralisation est une cartouche filtrante 110 (voir figure 4) comprenant un média filtrant constitué d'une résine à échange d'ions. La cartouche filtrante est logée dans un boîtier de filtre 101 comprenant un orifice d'entrée 101a et un orifice de sortie 101b d'eau. Le boîtier de filtre 101 est monté dans le circuit de recirculation 90 entre la tubulure de sortie 92 du réservoir et la tubulure d'entrée 91 dans le réservoir, en sorte que l'eau qui sort du réservoir 10 par la tubulure de sortie 92 entre dans le boîtier de filtre 101 par l'orifice d'entrée 101a de ce dernier puis traverse la cartouche filtrante 110, avant de ressortir du boîtier de filtre 101 par l'orifice de sortie 101b de ce dernier, pour retourner dans le réservoir 10 par la tubulure d'entrée 91. Pour faciliter la maintenance de la cartouche filtrante 110, le boîtier de filtre 101 est positionné dans une zone du véhicule facile d'accès, par exemple, sous le capot moteur.

Outre les éléments et composants précités, un dispositif de ventilation 11 est ménagé dans le haut du réservoir 10 pour équilibrer la pression entre l'intérieur et l'extérieur du réservoir 10. Une pompe à jet 12 associée à un clapet anti-retour 13 et un tuyau d'aspiration 14 sert à remplir le pot stabilisateur 70 afin d'assurer un bon fonctionnement du module WDM. Un moyen de chauffage 15 est également prévu à l'intérieur du réservoir 10 pour dégeler l'eau du réservoir quand elle gelée. Le moyen de chauffage 15 est typiquement une résistance chauffante électrique fixée au fond du réservoir 10. Lors du remplissage du réservoir 10 par la goulotte de remplissage 82, il est avantageux que le pot stabilisateur 70 soit rempli en premier, pour cela, on rajoute lors de la fabrication du réservoir de stockage 10, un tuyau interne 16. Le tuyau 16 est situé à l'intérieur du réservoir et s'étend entre deux extrémités : une extrémité raccordée de manière étanche à la tubulure d'alimentation 81 par l'intérieur du réservoir 10, et une extrémité libre débouchant au-dessus du pot stabilisateur 70 et orientée en direction de ce dernier. Ainsi, lorsque de l'eau est versée dans la goulotte de remplissage 82 du réservoir, cette eau coule dans la tubulure d'alimentation 81, puis dans le tuyau 16 avant de déboucher dans le pot stabilisateur 70.

Dans un mode de réalisation ne faisant pas partie de l'invention et illustré à la figure 1, lors de la fabrication du réservoir 10, un deuxième tuyau interne 17 est placé dans le réservoir. Le tuyau 17 est un tuyau qui s'étend entre la pompe d'alimentation 20 et la tubulure de sortie 92 du réservoir 10 pour raccorder ladite pompe au circuit de recirculation 90. Ainsi, quand l'unité ECU commande à la pompe d'alimentation 20 d'envoyer l'eau du réservoir 10 dans le circuit de recirculation 90, cette eau est envoyée sous pression dans le circuit de recirculation 90 à travers le tuyau 17. Le fait d'envoyer l'eau sous pression dans le circuit de recirculation 90, c'est-à-dire dans le filtre 100, est particulièrement avantageux car on évite ainsi une perte de charge dans le circuit de recirculation 90 causée par le passage de l'eau dans le filtre 100.

Lors de la fabrication du réservoir 10, un troisième tuyau interne 18 est placé dans le réservoir. A l'instar du tuyau 16, le tuyau 18 sert à remplir le pot stabilisateur 70. Le tuyau 18 s'étend entre deux extrémités : une extrémité raccordée de manière étanche à la tubulure d'entrée 91 dans le réservoir, et une extrémité libre débouchant au-dessus du pot stabilisateur 70 et orientée en direction de ce dernier.

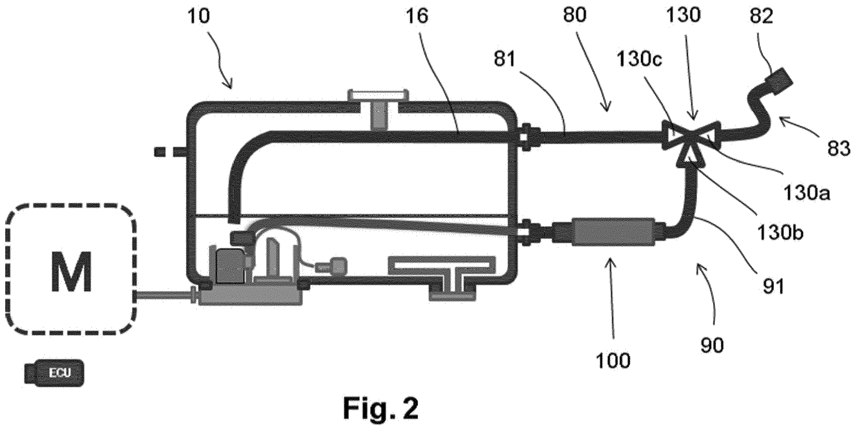

Selon un premier mode de réalisation de l'invention représenté à la figure 2, le système d'injection comprend une électrovanne 130 pilotée par l'unité ECU. L'électrovanne 130 est une électrovanne à 3 voies comprenant une première entrée 130a raccordée à la goulotte de remplissage 82, une deuxième entrée 130b raccordée à la tubulure d'entrée 91 du circuit de recirculation 90, et une sortie 130c raccordée à la tubulure d'alimentation 81 du circuit d'alimentation 80. Ainsi, lors du remplissage du réservoir 10 par la goulotte de remplissage 82, l'unité ECU commande à l'électrovanne 130 d'ouvrir le circuit de remplissage 83 ainsi que le circuit d'alimentation 80 et de fermer le circuit de recirculation 90. Le circuit de remplissage 83 est la section du circuit d'alimentation 80 se trouvant en amont de l'électrovanne 130. Dès que le réservoir 10 est rempli, l'unité ECU commande à l'électrovanne 130 de fermer le circuit de remplissage 83 et d'ouvrir le circuit de recirculation 90. Ainsi, l'eau du réservoir est recirculée dans le circuit de recirculation 90 pour être filtrée par le filtre 100 placé dans le circuit de recirculation 90.

Grâce à cette configuration particulière du système d'injection selon l'invention, l'eau recirculée dans le circuit de recirculation 90 retourne dans le réservoir 10 par le tuyau interne 16, on limite ainsi le nombre de tuyaux présents dans le réservoir 10 en supprimant le tuyau interne 18.

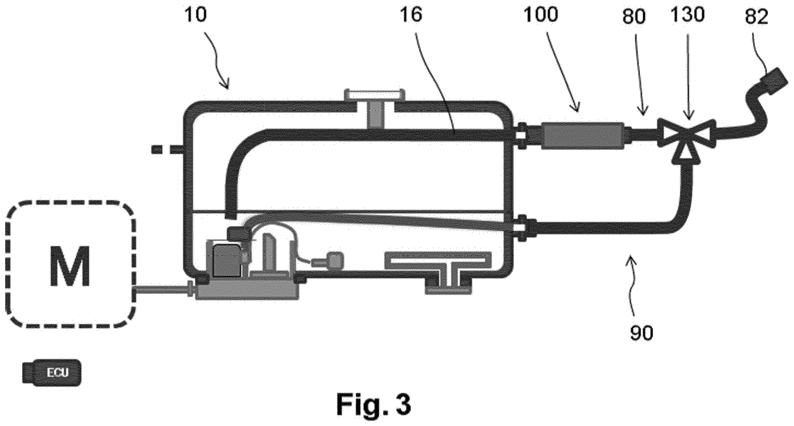

La figure 3 illustre une variante de réalisation du premier mode de réalisation de l'invention. Dans ce deuxième mode de réalisation, le filtre 100 de filtration est placé dans le circuit d'alimentation 80. Grâce à cette configuration particulière du système d'injection, l'eau qui est versée dans la goulotte de remplissage 82 est filtrée une première fois avant de remplir le réservoir 10.

La figure 4 est une représentation schématique de la cartouche filtrante 110 de déminéralisation. La cartouche filtrante 110 est typiquement constituée d'un corps creux 111 rempli avec un média filtrant comme par exemple une résine à échange d'ions. La cartouche filtrante présente une entrée 111a pour l'eau à filtrer et une sortie 111b pour l'eau filtrée. L'entrée 111a de la cartouche filtrante communique avec l'orifice d'entrée 101a du boîtier de filtre 101 et la sortie 111b de la cartouche filtrante communique avec l'orifice de sortie 101b du boîtier de filtre 101. Des moyens d'étanchéité 110a et 110b sont associés à la cartouche filtrante pour assurer que toute l'eau qui sort du boîtier de filtre 101 est passée par la cartouche filtrante 110. De plus, on prévoit des moyens de chauffage 102 du filtre 100 pour dégeler l'eau qui pourrait être gelée dans le filtre à cause des conditions climatiques, par exemple. Ces moyens de chauffage 102 sont typiquement une résistance chauffante électrique logée à l'intérieur du boîtier de filtre 101 ou, alternativement, à l'extérieure de ce dernier.

A la figure 5, on montre une variante de réalisation de la cartouche filtrante où un filtre fin 120 est associé au filtre de déminéralisation 110. Un filtre fin est un corps poreux (feutre, papier, membrane, grille, etc.) au travers duquel on fait passer un liquide pour le clarifier ou pour l'épurer. Dans l'invention, le filtre fin sert à filtrer les impuretés présentes dans l'eau, comme par exemple des particules en suspension, des débris organiques. Dans un mode préféré de réalisation, le filtre fin présente une largeur de maille comprise entre 30 µm et 60 µm.

Bien entendu, on pourra apporter à l'invention de nombreuses modifications sans sortir du cadre de celle-ci.

Par exemple, au lieu d'être relié par des tubulures d'entrée et de sortie à l'extérieur du réservoir 10, le circuit de recirculation 90 peut être relié par des tubulures d'entrée et de sortie à l'intérieur du réservoir 10. Grâce à cette configuration, on peut envisager de placer le filtre 100 de filtration dans un logement ménagé dans une paroi du réservoir 10 (non représenté). Un tel logement sera fermé hermétiquement par un bouchon dévissable pour pouvoir être dévissé afin de rendre le filtre amovible et interchangeable. Dans cette configuration, le nombre de tuyaux et de tubulures à l'extérieur du réservoir est réduit et, subsidiairement, le chauffage du filtre est facilité.

De plus, pour que le système d'injection d'eau selon l'invention ait un poids réduit et soit résistant aux chocs, le réservoir pourra être fabriqué en plastique, par exemple, en polyéthylène haute densité (PEHD). Avantageusement, les tubulures et les tuyaux pourront aussi être fabriqués en plastique, de même que le boîtier de filtre.

En outre, il est possible de déterminer la concentration en ions de l'eau contenue dans le réservoir et donc sa nature déminéralisée ou pas, en mesurant autre chose que la conductivité électrique de l'eau. Par exemple, la mesure de la résistivité électrique de l'eau, de sa dureté, de sa densité, de sa turbidité ou de son pH donne aussi une bonne information sur la nature déminéralisée ou pas de l'eau. Ainsi, le capteur de qualité décrit précédemment peut, alternativement, être un capteur de résistivité électrique, un capteur de dureté, un capteur de densité, un capteur de turbidité de l'eau ou une sonde pH. Dès lors, on appelle capteur de qualité tout type de capteur capable de mesurer une propriété physico-chimique de l'eau donnant une information représentative de la concentration en ions de l'eau. Ainsi, dans le cas où le capteur de qualité 60 est un capteur qui mesure en continu la résistivité électrique de l'eau du réservoir 10, la plage de valeurs de référence s'étendra de 20 kΩ.cm à l'infini et, de préférence, de 40 kΩ.cm à 500 kΩ.cm.

## Revendications

1. Système d'injection d'une solution aqueuse dans un moteur à injection, comprenant un réservoir (10) d'une solution aqueuse, un circuit d'alimentation (80) en solution aqueuse dudit réservoir (10), un filtre (100) de filtration de la solution aqueuse, une goulotte de remplissage (82) du réservoir (10) et un circuit de recirculation (90) de la dite solution aqueuse,
le filtre de filtration (100) étant placé dans ledit circuit d'alimentation (80) et/ou dans ledit circuit de recirculation (90),
**caractérisé en ce qu'**il comprend, en outre, une électrovanne (130) comprenant une première entrée (130a) raccordée à la goulotte de remplissage (82) du réservoir, une deuxième entrée (130b) raccordée au circuit de recirculation (90), et une sortie (130c) raccordée au circuit d'alimentation (80).

2. Système d'injection selon la revendication 1, **caractérisé en ce qu'**il comprend en outre un conduit d'injection (40) destiné à être relié à un circuit d'admission du moteur à injection, le système étant configuré de sorte que la solution aqueuse en provenance du filtre (100) de filtration transite par le réservoir (10) avant de pénétrer dans le conduit d'injection (40).

3. Système d'injection selon la revendication 1 ou 2, **caractérisé en ce que** ledit circuit d'alimentation (80) comprend une tubulure d'alimentation (81) raccordée audit réservoir (10) ainsi qu'une goulotte de remplissage (82) dudit réservoir (10) raccordée à ladite tubulure d'alimentation (81).

4. Système d'injection selon l'une quelconque des revendications 1 à 3, **caractérisé en ce que** ledit circuit de recirculation (90) comprend une tubulure d'entrée (91) dans le réservoir (10) et une tubulure de sortie (92) du réservoir (10).

5. Système d'injection selon l'une quelconque des revendications 1 à 4, **caractérisé en ce que** ladite solution aqueuse est de l'eau, notamment de l'eau du robinet ou de l'eau de pluie, et ledit filtre (100) est un filtre qui retient les minéraux et/ou les impuretés.

6. Système d'injection selon la revendication 5, **caractérisé en ce que** ledit filtre (100) qui retient les minéraux est un filtre de déminéralisation comprenant un média filtrant constitué d'une résine à échange d'ions.

7. Système d'injection selon la revendication 5 ou 6, **caractérisé en ce que** ledit filtre (100) qui retient les impuretés est un filtre fin (120).

8. Système d'injection selon l'une quelconque des revendications 5 à 7, **caractérisé en ce que** ledit filtre (100) est un filtre amovible interchangeable.

9. Système d'injection selon la revendication 8, **caractérisé en ce que** ledit filtre (100) comprend une cartouche filtrante (110) lavable, rechargeable ou jetable.

10. Système d'injection selon l'une quelconque des revendications 1 à 9, **caractérisé en ce que** ledit filtre (100) comprend des moyens de chauffage (102) apte à chauffer ladite solution aqueuse.

11. Système d'injection selon l'une quelconque des revendications 1 à 10, **caractérisé en ce qu'**il comprend, en outre, un capteur de qualité (60) de ladite solution aqueuse.

12. Procédé de purification d'une solution aqueuse pour un système d'injection d'une solution aqueuse dans un moteur à injection selon la revendication 1, **caractérisé en ce qu'**il comprend les étapes suivantes :
a. remplir un réservoir (10) avec une solution aqueuse par un circuit d'alimentation (80),
b. pomper ladite solution aqueuse contenue dans ledit réservoir (10),
c. envoyer ladite solution aqueuse pompée à l'étape b) dans un circuit de recirculation (90) de ladite solution aqueuse,
d. filtrer ladite solution aqueuse dans ledit circuit d'alimentation (80) et/ou dans ledit circuit de recirculation (90).

13. Procédé de purification d'une solution aqueuse selon la revendication 12, **caractérisé en ce qu'**il comprend en outre les étapes suivantes, après l'étape d):
e. envoyer ladite solution aqueuse dans le réservoir (10),
f. envoyer ladite solution aqueuse dans un conduit d'injection (40) destiné à être relié à un circuit d'admission du moteur à injection.

14. Procédé de diagnostic de la pureté d'une solution aqueuse pour un système d'injection d'une solution aqueuse dans un moteur à injection selon la revendication 1, **caractérisé en ce qu'**il comprend les étapes suivantes :
a. mesurer une propriété physico-chimique σ d'une solution aqueuse contenue dans un réservoir (10),
b. comparer la propriété physico-chimique σₘ mesurée à l'étape a) à une plage de valeurs de référence [σ_{ref.min},σ_{ref.max}] où σ_{ref.min} est une valeur de référence minimale et σ_{ref.max} est une valeur de référence maximale,
c. envoyer ladite solution aqueuse dans un filtre (100) de déminéralisation si la propriété physico-chimique σₘ mesurée à l'étape a) est en dehors de ladite plage de valeurs de référence [σ_{ref.min},σ_{ref.max}],
d. répéter les étapes a), b) et c) tant que la propriété physico-chimique σₘ mesurée à l'étape a) est en dehors de ladite plage de valeurs de référence [σ_{ref.min},σ_{ref.max}],
e. signaler par un signal S un problème si après un temps prédéterminé T la propriété physico-chimique mesurée σₘ reste en dehors de ladite plage de valeurs de référence [σ_{ref.min},σ_{ref.max}].

15. Procédé de diagnostic selon la revendication 14, **caractérisé en ce que** le signal S de l'étape e) est une indication pour nettoyer, recharger ou remplacer le filtre (100) de déminéralisation.

16. Procédé d'injection d'une solution aqueuse dans un moteur à injection, **caractérisé en ce qu'**il comprend des étapes de diagnostic de la pureté de la solution aqueuse selon le procédé de diagnostic de la revendication 14 et **en ce qu'**il comprend en outre une étape d'envoi de ladite solution aqueuse dans le moteur à injection si la propriété physico-chimique σₘ mesurée à l'étape a) est dans ladite plage de valeurs de référence [σ_{ref.min},σ_{ref.max}].

## Patentansprüche

1. System für die Einspritzung einer wässrigen Lösung in einen Einspritzmotor,
umfassend einen Tank (10) für eine wässrige Lösung, einen Kreislauf für die Versorgung (80) des Tanks (10) mit wässriger Lösung, einen Filter (100) für die Filtrierung der wässrigen Lösung, einen Stutzen für die Befüllung (82) des Tanks (10) und einen Kreislauf für die Umwälzung (90) der wässrigen Lösung,
wobei der Filtrierungsfilter (100) in dem Versorgungskreislauf (80) und/oder in dem Umwälzungskreislauf (90) platziert ist,
**dadurch gekennzeichnet,**
**dass** es, ferner, ein Magnetventil (130) umfasst, das einen ersten Einlass (130a), der an den Stutzen für die Befüllung (82) des Tanks angeschlossen ist, einen zweiten Einlass (130b), der an den Umwälzungskreislauf (90) angeschlossen ist, und einen Auslass (130c), der an den Versorgungskreislauf (80) angeschlossen ist, umfasst.

2. Einspritzsystem nach Anspruch 1, **dadurch gekennzeichnet, dass** es ferner eine Einspritzleitung (40) umfasst, die dazu bestimmt ist, mit einem Ansaugkreislauf des Einspritzmotors verbunden zu werden, wobei das System so ausgebildet ist, dass die wässrige Lösung, die aus dem Filtrierungsfilter (100) kommt, den Tank (10) durchströmt, bevor sie in die Einspritzleitung (40) eintritt.

3. Einspritzsystem nach Anspruch 1 oder 2, **dadurch gekennzeichnet, dass** der Versorgungskreislauf (80) eine Versorgungsleitung (81), die an den Tank (10) angeschlossen ist, sowie einen Stutzen für die Befüllung (82) des Tanks (10), der an die Versorgungsleitung (81) angeschlossen ist, umfasst.

4. Einspritzsystem nach einem der Ansprüche 1 bis 3, **dadurch gekennzeichnet, dass** der Umwälzungskreislauf (90) eine Leitung für den Einlass (91) in den Tank (10) und eine Leitung für den Auslass (92) aus dem Tank (10) umfasst.

5. Einspritzsystem nach einem der Ansprüche 1 bis 4, **dadurch gekennzeichnet, dass** die wässrige Lösung Wasser ist, insbesondere Wasser aus dem Wasserhahn oder Regenwasser, und der Filter (100) ein Filter ist, der Mineralstoffe und/oder Verunreinigungen zurückhält.

6. Einspritzsystem nach Anspruch 5, **dadurch gekennzeichnet, dass** der Filter (100), der die Mineralstoffe zurückhält, ein Demineralisierungsfilter ist, der ein Filtermedium umfasst, das von einem Ionenaustauschharz gebildet ist.

7. Einspritzsystem nach Anspruch 5 oder 6, **dadurch gekennzeichnet, dass** der Filter (100), der die Verunreinigungen zurückhält, ein Feinfilter (120) ist.

8. Einspritzsystem nach einem der Ansprüche 5 bis 7, **dadurch gekennzeichnet, dass** der Filter (100) ein austauschbarer entfernbarer Filter ist.

9. Einspritzsystem nach Anspruch 8, **dadurch gekennzeichnet, dass**, der Filter (100) eine waschbare, nachfüllbare oder Einweg-Filterkartusche (110) umfasst.

10. Einspritzsystem nach einem der Ansprüche 1 bis 9, **dadurch gekennzeichnet, dass** der Filter (100) Heizmittel (102) umfasst, die in der Lage sind, die wässrige Lösung zu erhitzen.

11. Einspritzsystem nach einem der Ansprüche 1 bis 10, **dadurch gekennzeichnet, dass** es, ferner, einen Sensor für die Qualität (60) der wässrigen Lösung umfasst.

12. Verfahren zum Reinigen einer wässrigen Lösung für ein System zum Einspritzen einer wässrigen Lösung in einen Einspritzmotor nach Anspruch 1, **dadurch gekennzeichnet, dass** es die folgenden Schritte umfasst:
a. Befüllen eines Tanks (10) mit einer wässrigen Lösung durch einen Versorgungskreislauf (80),
b. Fördern der in dem Tank (10) enthaltenen wässrigen Lösung,
c. Leiten der in Schritt b) geförderten wässrigen Lösung in einen Kreislauf für die Umwälzung (90) der wässrigen Lösung,
d. Filtrieren der wässrigen Lösung in dem Versorgungskreislauf (80) und/oder in dem Umwälzungskreislauf (90).

13. Verfahren zum Reinigen einer wässrigen Lösung nach Anspruch 12, **dadurch gekennzeichnet, dass** es ferner die folgenden Schritte, nach dem Schritt d), umfasst:
e. Leiten der wässrigen Lösung in den Tank (10),
f. Leiten der wässrigen Lösung in eine Einspritzleitung (40), die dazu bestimmt ist, mit einem Ansaugkreislauf des Einspritzmotors verbunden zu werden.

14. Verfahren für die Diagnose der Reinheit einer wässrigen Lösung für ein System zum Einspritzen einer wässrigen Lösung in einen Einspritzmotor nach Anspruch 1, **dadurch gekennzeichnet, dass** es die folgenden Schritte umfasst:
a. Messen einer physikalisch-chemischen Eigenschaft σ einer in einem Tank (10) enthaltenen wässrigen Lösung,
b. Vergleichen der in Schritt a) gemessenen physikalisch-chemischen Eigenschaft σₘ mit einem Bereich von Referenzwerten [σ_{ref,min}, σ_{ref,max}] , in dem σ_{ref,min} ein minimaler Referenzwert ist und σ_{ref,max} ein maximaler Referenzwert ist,
c. Leiten der wässrigen Lösung in einen Demineralisierungsfilter (100), wenn die in Schritt a) gemessene physikalisch-chemische Eigenschaft σₘ außerhalb des Bereiches von Referenzwerten [σ_{ref,min}, σ_{ref,max}] liegt,
d. Wiederholen der Schritte a), b) und c), solange die in Schritt a) gemessene physikalisch-chemische Eigenschaft σₘ außerhalb des Bereiches von Referenzwerten [σ_{ref,min}, σ_{ref,max}] liegt,
e. Anzeigen eines Problems durch ein Signal S, wenn nach einer vorbestimmten Zeit T die physikalisch-chemische Eigenschaft σₘ weiterhin außerhalb des Bereiches von Referenzwerten [σ_{ref,min}, σ_{ref,max}] liegt.

15. Diagnoseverfahren nach Anspruch 14, **dadurch gekennzeichnet, dass** das Signal S in Schritt e) ein Hinweis zum Reinigen, Nachfüllen oder Ersetzen des Demineralisierungsfilters (100) ist.

16. Verfahren für die Einspritzung einer wässrigen Lösung in einen Einspritzmotor, **dadurch gekennzeichnet, dass** es Schritte der Diagnose der Reinheit der wässrigen Lösung gemäß dem Diagnoseverfahren nach Anspruch 14 umfasst, und dadurch, dass es ferner einen Schritt der Leitung der wässrigen Lösung in den Einspritzmotor umfasst, wenn die in Schritt a) gemessene physikalisch-chemische Eigenschaft σₘ im Bereich von Referenzwerten [σ_{ref,min}, σ_{ref,max}] liegt.

## Claims

1. A system for injecting an aqueous solution into an injection engine, comprising a tank (10) for an aqueous solution, a circuit (80) for supplying aqueous solution to said tank (10), a filter (100) for filtering the aqueous solution, a filler neck (82) of said tank (10) and a circuit (90) for recirculating said aqueous solution, said filtration filter (100) being placed in said supply circuit (80) and/or in said recirculation circuit (90),
**characterized in that** it further comprises an electrovalve (130) comprising a first inlet (130a) connected to the filler neck (82) of the tank, a second inlet (130b) connected to the recirculation circuit (90), and an outlet (130c) connected to the supply circuit (80).

2. The injection system according to claim 1, **characterized in that** it further comprises an injection duct (40) intended to be connected to an intake circuit of the injection engine, the system being configured so that the aqueous solution originating from the filtration filter (100) passes via the tank (10) before penetrating the injection circuit (40).

3. The injection system according to claim 1 or 2, **characterized in that** said supply circuit (80) comprises a supply pipe (81) connected to said tank (10) as well as a filler neck (82) of said tank (10) connected to said supply pipe (81).

4. The injection system according to any one of claims 1 to 3, **characterized in that** said recirculation circuit (90) comprises a pipe for inlet (91) into the tank (10) and a pipe for outlet (92) out of the tank (10).

5. The injection system according to any one of claims 1 to 4, **characterized in that** said aqueous solution is water, in particular tap water or rainwater, and said filter (100) is a filter that retains minerals and/or impurities.

6. The injection system according to claim 5, **characterized in that** said filter (100) that retains minerals is a demineralization filter comprising a filtering medium consisting of an ion-exchange resin.

7. The injection system according to claim 5 or 6, **characterized in that** said filter (100) that retains impurities is a fine filter (120).

8. The injection system according to any one of claims 5 to 7, **characterized in that** said filter (100) is a removable interchangeable filter.

9. The injection system according to claim 8, **characterized in that** said filter (100) comprises a filtering cartridge (110) which is washable, rechargeable or disposable.

10. The injection system according to any one of claims 1 to 9, **characterized in that** said filter (100) comprises heating means (102) capable of heating said aqueous solution.

11. The injection system according to any one of claims 1 to 10, **characterized in that** it further comprises a quality sensor (60) for said aqueous solution.

12. A process for purifying an aqueous solution for a system for injecting an aqueous solution into an injection engine according to claim 1, **characterized in that** it comprises the following steps:
a. filling a tank (10) with an aqueous solution by a supply circuit (80),
b. pumping said aqueous solution contained in said tank (10),
c. sending said aqueous solution pumped in step b) into a circuit for recirculating (90) said aqueous solution,
d. filtering said aqueous solution into said supply circuit (80) and/or into said recirculation circuit (90).

13. The process for purifying an aqueous solution according to claim 12, **characterized in that** it further comprises the following steps, after step d):
e. sending said aqueous solution into the tank (10),
f. sending said aqueous solution into an injection duct (40) intended to be connected to an intake circuit of the injection engine.

14. A process for diagnosing the purity of an aqueous solution for a system for injecting an aqueous solution into an injection engine according to claim 1, **characterized in that** it comprises the following steps:
a. measuring a physicochemical property σ of an aqueous solution contained in a tank (10),
b. comparing the physicochemical property σₘ measured in step a) to a range of reference values [σ_{ref.min}, σ_{ref.max}] wherein σ_{ref.min} is a minimum reference value and σ_{ref.max} is a maximum reference value,
c. sending said aqueous solution into a demineralization filter (100) if the physicochemical property σₘ measured in step a) is outside said range of reference values [σ_{ref.min}, σ_{ref.max}],
d. repeating steps a), b) and c) as long as the physicochemical property σₘ measured in step a) is outside said range of reference values [σ_{ref.min}, σ_{ref.max}],
e. announcing with a signal S a problem if, after a predetermined period of time T, the measured physicochemical property σₘ remains outside said range of reference values [σ_{ref.min}, σ_{ref.max}].

15. The diagnostic process according to claim 14, **characterized in that** the signal S of step e) is an indication to clean, recharge or replace the demineralization filter (100).

16. A process for injecting an aqueous solution into an injection engine, **characterized in that** it comprises steps of diagnosing the purity of the aqueous solution according to the diagnostic process of claim 14, and **in that** it further comprises a step of sending said aqueous solution into the injection engine if the physicochemical property σₘ measured in step a) is within said range of reference values [σ_{ref.min}, σ_{ref.max}].
